# EUROPEAN PATENT SPECIFICATION

(11) **EP 2 364 952 B1**
(45) Date of publication and mention of the grant of the patent: **20.12.2017**
(21) Application number: 10195604.3
(22) Date of filing: 30.10.2003
(51) Int. Cl.: G05D 11/00, G05D 16/20, G05D 11/13

(54) **Fast set material proportioner**
Snellhärtmaterialproportionierer
Pompe proportionelle pour matériel solidifiant rapide

(30) Priority: 04.11.2002 US 423342 P
(43) Date of publication of application: 14.09.2011
(62) Divisional of application: 03768548.4
(73) Proprietor: Graco Minnesota Inc., Minneapolis, MN 55440-1441 (US)
(72) Inventor: McCormick, Martin, Forest Lake, MN 55025 (US); Weikel, William, Maple Grove, MN 55311 (US); Deneson, Bret, Otsego, MN 55374 (US); Larsen, David, Albertville, MN 55301 (US)
(74) Representative: Miller Sturt Kenyon

(56) References cited:
- EP-A2- 0 112 638
- WO-A-01/60508
- DE-A1- 10 021 799
- US-A- 3 097 764
- US-A- 3 196 802
- US-A- 5 992 686

## Description

### TECHNICAL FIELD

This application claims the benefit of US Application serial number 60/423,342, filed November 1, 2002.

### BACKGROUND ART

Plural component proportioners for the mixing of materials such as polyureas and other foams are well known. Such devices have traditionally been simple mechanical proportioners or else complicated and heavy hydraulic powered units. While electrically operated units such as that shown in US Pat. No. 3,196,802 have been used to proportion plural component materials, such are not designed for fast setting materials of the type mentioned which require precise control of both ratio and pressure.

US 5,992,686 discloses a system for metering and dispensing single and plural component liquids and solids. The dispensing system has a microprocessor-based control system and progressive cavity pumps which provide control of component ratios, shot sizes, flow rates and dispense durations. The system has numerous feedback components for controlling the pressure, flow rates, fluid levels and amounts of fluids dispensed. Where a valved nozzle is used, the pressure in the flow system is used to control the pumps rather than the valve. Such a system may be used as a sprayer with compressed air added. Drum rams are associated with the supply drums and the progressive cavity pumps may be placed on the drum ram. Maintenance of a steady state in the system is accomplished with back and forth movement of the pump, with compensation for pressure changes. Absolute rotational position of the pump can be monitored when a set pressure is maintained, to diagnose system conditions. A high flow system uses ball valves and a releasably coupled manifold. A mold charging system uses pressure to control the pumps which are cycled on and off to avoid overpressurizing the mold. The rate of pressure increase is used to control the rate of flow from the pumps as the mold approaches completion of the charge, again to avoid overpressurizing the mold. A signal controlled by a timer can indicate elapsed time as a warning that material within the mixer conduit is hardening to a condition such that flow cannot be reinitiated.

WO 01/60508 discloses a device and a method for continuous high-pressure treatment. The method comprises the step of increasing the pressure of raw material in a feed tank by a pressurizing pump so as to continuously feed the raw material to treatment containers. The method also includes increasing the flow rate of the pressurizing pump over that of a depressurizing pump or continuously exhausting the raw material from the treatment containers through a pressure regulating flow path resistance while depressurizing. The device comprises pressure releasing bypass circuits disposed in the flow path resistance in parallel with each other, wherein the insides of the treatment containers are kept in a specified high-pressure state during the continuous processing.

### DISCLOSURE OF THE INVENTION

It is therefore an object of this invention to provide a proportioner which is electrically powered, can be easily manufactured and serviced, is easily transported and capable of precise metering of the two components.

According to an aspect of the present invention, there is provided a proportioner for dispensing plural component materials as defined in claim 1.

Towards this end, the proportioner has a variable speed controlled DC motor having a gearbox and crankshaft at either end which are connected to reciprocating piston pumps. Such motors, gearboxes and cranks are well known for use in electrically powered airless paint sprayers such as those sold by the assignee of the instant invention under the trademark ULTRA. The outputs of the two pumps are fed to a manifold where the pressure of each output is measured. The user sets a setpoint pressure (e.g. 1000 psi) and the controller then compares the pressures of the first and second components (typically designated as the catalyst or A component and the resin or B component) and controls the higher of the two relative to the setpoint. Most materials today are designed for 1:1 ratios, that is, equal amounts of each component. Because of variations in viscosity and temperature, even though equal amounts of each component will be pumped (for mixing at the spray gun or other applicator) the pressure might be higher on one side or the other. Thus the controller continually compares the pressures and regulates the higher one to the setpoint.

Ratio assurance is monitored by continuing to look at both output pressures. If one side falls below a predetermined percentage of the setpoint (50% in the preferred embodiment), an alarm may be raised or operation stopped. Of course this threshold percentage may be varied.

These and other objects and advantages of the invention will appear more fully from the following description made in conjunction with the accompanying drawings wherein like reference characters refer to the same or similar parts throughout the several views.

### BRIEF DESCRIPTION OF DRAWINGS

Figure 1 is an isometric view of the front of the proportioner of the instant invention.
Figure 2 is an isometric view of the rear of the proportioner of the instant invention.

### BEST MODE FOR CARRYING OUT THE INVENTION

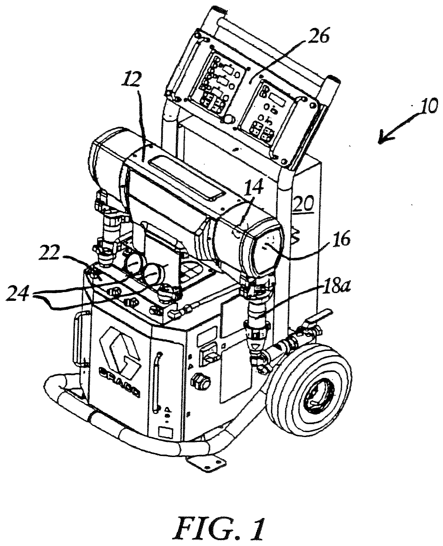

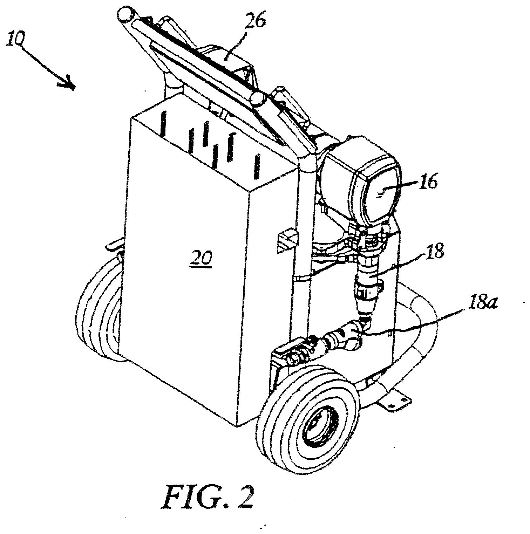

The proportioner of the instant invention, generally designated 10, is shown in Figures 1 and 2. Towards this end, the proportioner 10 has a variable speed controlled DC motor 12 having a gearbox 14 and crankshaft 16 at either end which are connected to reciprocating piston pumps 18. Such motors, gearboxes and cranks are well known for use in electrically powered airless paint sprayers such as those sold by the assignee of the instant invention under the trademark ULTRA. The outputs 18a of the two pumps 18 are fed to heaters 20 and thence to a manifold 22 where the pressure of each output is measured by pressure sensors 24.

The user sets a setpoint pressure (e.g. 1000 psi) and the controller 26 then compares the pressures of the two components and controls the higher of the two relative to the setpoint. The DC motor control is of the type shown in US Patent No. 4,397,610.

Most materials today are designed for 1:1 ratios, that is, equal amounts of each component. Because of variations in viscosity and temperature, even though equal amounts of each component will be pumped (for mixing at the spray gun or other applicator) the pressure might be higher on one side or the other. Thus the controller 26 continually compares the pressures and regulates the higher one to the setpoint.

Ratio assurance is monitored by continuing to look at both output pressures. If one side falls below a predetermined percentage of the setpoint (50% in the preferred embodiment), an alarm may be raised or operation stopped. Of course this threshold percentage may be varied.

It is contemplated that various changes and modifications may be made to the proportioner without departing from the scope of the invention as defined by the following claims.

## Claims

1. A proportioner for dispensing plural component materials, said proportioner comprising:
an electric motor (12) having first and second ends;
a first gearbox (14) connected to the first end of the electric motor (12);
a first crankshaft (16) connected to the first gearbox (14);
a first reciprocating piston pump (18) attached to said first motor end by the first gearbox (14) and the first crankshaft (16), said first pump being connected to a source of a first material and having an output which has a first pressure;
a second reciprocating piston pump (18), said second pump being connected to a source of a second material, which is different from said first material, and said second pump having an output which has a second pressure; **characterized by**
a second gearbox (14) connected to the second end of the electric motor (12);
a second crankshaft (16) connected to the second gearbox (14); and
a controller with provision for a user-selectable setpoint, said controller continually monitoring said first and second pressures and providing an alarm in the event one of said pressures falls to a predetermined percentage of said setpoint,
wherein said second reciprocating piston pump (18) is attached to said second motor end by the second gearbox (14) and the second crankshaft (16).

## Patentansprüche

1. Proportionierer für die Abgabe von Mehrkomponentenmaterialien, wobei der Proportionierer Folgendes umfasst:
einen Elektromotor (12), der ein erstes und ein zweites Ende aufweist;
ein erstes Getriebe (14), das mit dem ersten Ende des Elektromotors (12) verbunden ist;
eine erste Kurbelwelle (16), die mit dem ersten Getriebe (14) verbunden ist;
eine erste Hubkolbenpumpe (18), die durch das erste Getriebe (14) und die erste Kurbelwelle (16) an dem ersten Motorende angebracht ist, wobei die erste Pumpe mit einer Quelle eines ersten Materials verbunden ist und einen Ausgang aufweist, der einen ersten Druck hat;
eine zweite Hubkolbenpumpe (18), wobei die zweite Pumpe mit einer Quelle eines zweiten Materials verbunden ist, das von dem ersten Material verschieden ist, und die zweite Pumpe einen Ausgang aufweist, der einen zweiten Druck hat; **gekennzeichnet durch**
ein zweites Getriebe (14), das mit dem zweiten Ende des Elektromotors (12) verbunden ist;
eine zweite Kurbelwelle (16), die mit dem zweiten Getriebe (14) verbunden ist; und
eine Steuereinheit mit einer Einrichtung für einen durch einen Nutzer wählbaren Sollwert, wobei die Steuereinheit kontinuierlich den ersten und den zweiten Druck überwacht und einen Alarm ausgibt, falls einer der Drücke auf einen zuvor festgelegten Prozentsatz des Sollwertes sinkt,
wobei die zweite Hubkolbenpumpe (18) durch das zweite Getriebe (14) und die zweite Kurbelwelle (16) an dem zweiten Motorende angebracht ist.

## Revendications

1. Proportionneur pour la distribution de matières diversifiées, ce proportionneur comprenant :
un moteur électrique (12) doté d'une première et d'une seconde extrémité ;
un premier réducteur (14) connecté à la première extrémité du moteur électrique (12) ;
un premier vilebrequin (16) connecté au premier réducteur (14) ;
une première pompe à piston à mouvement alternatif (18) fixée à ladite première extrémité de moteur par le premier réducteur (14) et le premier vilebrequin (16), ladite première pompe étant connectée à une source de première matière et comportant une sortie ayant une première impression ;
une seconde pompe à piston à mouvement alternatif (18), ladite seconde pompe étant connectée à une source de seconde matière qui est différente de ladite première matière et ladite seconde pompe comportant une sortie qui a une seconde pression ; **caractérisé par**
un second réducteur (14) connecté à la seconde extrémité du moteur électrique (12) ;
un second vilebrequin (16) connecté au second réducteur (14) ; et
un contrôleur avec prévision d'un point de réglage sélectionnable par l'utilisateur, ledit contrôleur contrôlant lesdites première et seconde pressions et émettant une alarme dans l'éventualité où l'une desdites pressions chute à un pourcentage prédéterminé dudit point de réglage,
ladite seconde pompe à piston à mouvement alternatif (18) étant fixée à ladite seconde extrémité de moteur par le second réducteur (14) et le second vilebrequin (16) .
